# EUROPÄISCHE PATENTANMELDUNG

(11) **EP 1 712 986 A2**
(43) Veröffentlichungstag der Anmeldung: **18.10.2006**
(21) Anmeldenummer: 06112655.3
(22) Anmeldetag: 13.04.2006
(51) Int. Cl.: G06F 3/12

(54) **Verfahren und Anordnung zum Ausdrucken von Daten bei Nutzung eines Nachrichten-Signalisierungs-Services, sowie ein entsprechendes Computerprogramm und ein entsprechendes computerlesbares Speichermedium**

(30) Priorität: 15.04.2005 DE 102005017729; 19.04.2005 DE 102005018971
(71) Anmelder: ThinPrint GmbH, 10559 Berlin (DE)
(72) Erfinder: TRAPPE, Bernd, 12489, Berlin (DE); SCHIEBERLEIN, Jochen, 12247, Berlin (DE); PREUSSLER, Danny, 10294, Berlin (DE)
(74) Vertreter: Ziebig, Marlene

(57) **Zusammenfassung**

Die Erfindung betrifft ein Verfahren und eine Anordnung zum Ausdrucken von Daten bei Nutzung eines Nachrichten-Push-Services sowie ein entsprechendes Computerprogramm und ein entsprechendes computerlesbares Speichermedium, welche insbesondere einsetzbar sind, um das Drucken von Email-Texten und deren Anhängen von Nachrichten-Push-fähigen Endgeräten, wie beispielsweise Blackberry-Geräten, über bluetoothfähige Drucker zu ermöglichen.

Hierfür wird vorgeschlagen, bei dem Verfahren zum Ausdrucken von Daten bei Nutzung eines Nachrichten-Signalisierungs-Services, wobei auf einem Server des Nachrichten-Signalisierungs-Services (NSS-Server) eingehende Daten einem Endgerät signalisiert werden und ein Zugriff des Endgerätes auf die bei dem NSS-Server eingegangenen Daten unter Nutzung von Mobilfunktechnologie ausführbar ist, von dem Endgerät eine Anforderung zum Ausdrucken von Daten an den NSS-Server und/oder eine den Ausdruck steuernde Datenverarbeitungseinrichtung gesendet, die Übertragung von angeforderten Daten vom NSS-Server auf einen Druckserver automatisch durch ein auf dem NSS-Server und/oder auf der den Ausdruck steuernden Datenverarbeitungseinrichtung installiertes Computerprogramm veranlasst, auf dem Druckserver der Druckvorgang gestartet wird und die durch den Druckvorgang erzeugten Daten von dem Druckserver an das mobile Endgerät und von diesem Endgerät an einen vorgebbaren Drucker gesendet und dort ausgedruckt werden.

## Beschreibung

Die Erfindung betrifft ein Verfahren und eine Anordnung zum Ausdrucken von Daten bei Nutzung eines Nachrichten-Signalisierungs-Services (wie beispielsweise eines Nachrichten-Push-Services) sowie ein entsprechendes Computerprogramm und ein entsprechendes computerlesbares Speichermedium, welche insbesondere einsetzbar sind, um das Drucken von Email-Texten und deren Anhängen von Nachrichten-Push-fähigen Endgeräten, wie beispielsweise Blackberry-Geräten, über bluetoothfähige Drucker zu ermöglichen.

Nachrichten-Push-fähige Endgeräte, insbesondere e-Mail-Push-fähige Endgeräte, wie sie beispielsweise unter der Bezeichnung BlackBerry-Geräte bekannt sind, die explizit für die Darstellung und Bearbeitung von Emails konzipiert wurden, leiden bislang an einem wesentlichen Manko: Es ist nicht möglich, Emails und deren Anhänge direkt auf einen Drucker auszugeben.

Es sind bereits Lösungen beschrieben worden, die eine Druckoption für derartige (Blackberry-)Geräte bereitstellen. Allerdings handelt es sich dabei um eine nur eingeschränkt nutzbare Druckoption, da der Ausdruck nur über einen Netzwerkdrucker oder ein Faxgerät erfolgen kann.

Die Aufgabe der Erfindung besteht somit darin, ein Verfahren und eine Anordnung zum Ausdrucken von Daten bei Nutzung eines Nachrichten-Signalisierungs-Services sowie ein entsprechendes Computerprogramm und ein entsprechendes computerlesbares Speichermedium bereitzustellen, welche die Nachteile der bekannten Lösungen beheben sowie insbesondere den Ausdruck auf Druckern ermöglichen, die lokal an ein mobiles Endgerät angeschlossen sind.

Diese Aufgabe wird erfindungsgemäß durch die Merkmale in den Ansprüchen 1, 12, 13, 14 und 16 gelöst. Zweckmäßige Ausgestaltungen der Erfindung sind in den Unteransprüchen enthalten.

Ein besonderer Vorteil der Erfindung besteht darin, dass bei dem erfindungsgemäßen Verfahren durch ein Endgerät, welches geeignet ist, mit einem Nachrichten-Signalisierungs-Service zusammenzuwirken, z.B. durch ein Nachrichten-Push-fähiges Endgerät, beliebige Drucker, insbesondere lokal an das Endgerät angeschlossene Drucker, angesprochen werden können, indem bei dem Verfahren zum Ausdrucken von Daten bei Nutzung eines Nachrichten-Signalisierungs-Services, wobei auf einem Server des Nachrichten-Signalisierungs-Services (NSS-Server) eingehende Daten einem Endgerät signalisiert werden und ein Zugriff des Endgerätes auf die bei dem NSS-Server eingegangenen Daten unter Nutzung von Mobilfunktechnologie ausführbar ist, von dem Endgerät eine Anforderung zum Ausdrucken von Daten an den NSS-Server und/ oder eine den Ausdruck steuernde Datenverarbeitungseinrichtung gesendet, die Übertragung von angeforderten Daten vom NSS-Server auf einen Druckserver automatisch durch ein auf dem NSS-Server und/oder auf der den Ausdruck steuernden Datenverarbeitungseinrichtung installiertes Computerprogramm veranlasst, auf dem Druckserver der Druckvorgang gestartet wird und die durch den Druckvorgang erzeugten Daten von dem Druckserver an das mobile Endgerät und von diesem Endgerät an einen vorgebbaren Drucker gesendet und dort ausgedruckt werden.

In einer bevorzugten Ausführungsform ist vorgesehen, dass es sich bei dem Nachrichten-Signalisierungs-Service (NSS) um einen E-Mail-Push-Service handelt. Bei den auf dem NSS-Server eingehenden Daten kann es sich aber auch um
- E-Mails (mit oder ohne E-Mail-Anhang) und/oder,
- mittels Short Message Service (SMS) versandte Nachrichten und/oder
- mittels Multimedia Message Service (MMS) versandte Nachrichten
handeln.

Die Erfindung sieht vor, dass u.a. zu druckende E-Mail-Anhänge an einen Druckserver übergeben werden. Das kann dadurch geschehen, dass die E-Mail-Anhänge durch ein spezielles Computerprogramm von dem NSS-Server abgeholt und dem Druckserver zur Verfügung gestellt werden. Der Druckserver rendert anschließend die zu druckenden E-Mail-Anhänge und sendet die Druckdaten, vorzugsweise als Stream, an das mobile Endgerät. Die Daten werden also, so wie der Druckserver sie erzeugt hat, gleich an das mobile Endgerät weitergeleitet, so dass der Druckjob bereits mit den ersten übertragenen Daten begonnen werden kann. Vorteilhaft an diesem Vorgehen ist u.a., dass keine Zwischenspeicherung der Druckdaten auf dem Endgerät erforderlich ist. Ein weiterer Vorteil ist die schnelle Reaktion des Systems. Der Benutzer sieht relativ schnell einen Fortschritt.

In einer anderen bevorzugten Ausführungsform ist vorgesehen, dass als Mobilfunktechnologie
- Global System for Mobile Communications (GSM),
- General Packet Radio Service (GPRS),
- Code Division Multiple Access (CDMA) oder
- Universal Mobile Telecommunications System (UMTS) genutzt wird.

In einer weiteren bevorzugten Ausführungsform ist vorgesehen, dass für die Übertragung der durch den Druckvorgang erzeugten Daten von dem Druckserver an das mobile Endgerät eine zwischen dem NSS-Server und dem mobilen Endgerät eingerichtete Kommunikationsverbindung genutzt wird. Es kann sich dabei als vorteilhaft erweisen, wenn für die Übertragung von Daten zwischen dem Endgerät und dem NNS-Server und/oder zwischen dem Endgerät und der den Ausdruck steuernden Datenverarbeitungseinrichtung der Mobile Data Service (MDS) genutzt wird.

Darüber hinaus ist in einer bevorzugten Ausführungsform vorgesehen, dass für die Übertragung von Daten zwischen dem mobilen Endgerät und dem NSS-Server und/oder zwischen dem mobilen Endgerät und der den Ausdruck steuernden Datenverarbeitungseinrichtung für den Fall, dass das mobile Endgerät vom Server nicht adressiert werden kann, das mobile Endgerät selbstständig eine Verbindung zu der den Ausdruck steuernden Datenverarbeitungseinrichtung herstellt, und die durch den Druckvorgang erzeugten Daten über diese Verbindung an das mobile Endgerät übertragen werden.

In einer anderen bevorzugten Ausführungsform ist vorgesehen, dass die durch den Druckvorgang erzeugten Daten von dem mobilen Endgerät über eine Bluetooth-Schnittstelle oder über eine Infrarot-Schnittstelle an den vorgebbaren Drucker gesendet werden.

Eine erfindungsgemäße Anordnung zum Ausdrucken von Daten bei Nutzung eines Nachrichten-Signalisierungs-Services ist dadurch ausgezeichnet, dass sie mindestens einen Nachrichten-Signalisierungs-Server (NSS-Server) und mindestens ein mit dem Nachrichten-Signalisierungs-Service zusammenwirkendes Endgerät umfasst, wobei auf dem NSS-Server eingehende Daten dem Endgerät signalisiert werden und ein Zugriff des Endgerätes auf die bei dem NSS-Server eingegangenen Daten unter Nutzung von Mobilfunktechnologie ausführbar ist, und die Anordnung derart eingerichtet ist, dass ein Ausdrucken von Daten ermöglicht wird, indem von dem Endgerät eine Anforderung zum Ausdrucken von Daten an den NSS-Server und/oder eine den Ausdruck steuernde Datenverarbeitungseinrichtung gesendet, die Übertragung von angeforderten Daten vom NSS-Server auf einen Druckserver automatisch durch ein auf dem NSS-Server und/oder auf der den Ausdruck steuernden Datenverarbeitungseinrichtung installiertes Computerprogramm veranlasst, auf dem Druckserver der Druckvorgang gestartet wird und die durch den Druckvorgang erzeugten Daten von dem Druckserver an das mobile Endgerät und von diesem Endgerät an einen vorgebbaren Drucker gesendet und dort ausgedruckt werden.

Ein Computerprogramm zum Ausdrucken von Daten ermöglicht es einer Datenverarbeitungseinrichtung, nachdem es in den Speicher der Datenverarbeitungseinrichtung geladen worden ist, ein Verfahren zum Ausdrucken von Daten bei Nutzung eines Nachrichten-Signalisierungs-Services durchzuführen, wobei auf einem Server des Nachrichten-Signalisierungs-Services (NSS-Server) eingehende Daten einem Endgerät signalisiert werden und ein Zugriff des Endgerätes auf die bei dem NSS-Server eingegangenen Daten unter Nutzung von Mobilfunktechnologie ausführbar ist, und von dem Endgerät eine Anforderung zum Ausdrucken von Daten an den NSS-Server und/oder eine den Ausdruck steuernde Datenverarbeitungseinrichtung gesendet, die Übertragung von angeforderten Daten vom NSS-Server auf einen Druckserver automatisch durch ein auf dem NSS-Server und/oder auf der den Ausdruck steuernden Datenverarbeitungseinrichtung installiertes Computerprogramm veranlasst, auf dem Druckserver der Druckvorgang gestartet wird und die durch den Druckvorgang erzeugten Daten von dem Druckserver an das mobile Endgerät und von diesem Endgerät an einen vorgebbaren Drucker gesendet und dort ausgedruckt werden.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 13 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren zum Ausdrucken von Daten durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Verfahren zum Ausdrucken von Daten bei Nutzung eines Nachrichten-Signalisierungs-Services durchzuführen, wobei auf einem Server des Nachrichten-Signalisierungs-Services (NSS-Server) eingehende Daten einem Endgerät signalisiert werden und ein Zugriff des Endgerätes auf die bei dem NSS-Server eingegangenen Daten unter Nutzung von Mobilfunktechnologie ausführbar ist, und von dem Endgerät eine Anforderung zum Ausdrucken von Daten an den NSS-Server und/oder eine den Ausdruck steuernde Datenverarbeitungseinrichtung gesendet, die Übertragung von angeforderten Daten vom NSS-Server auf einen Druckserver automatisch durch ein auf dem NSS-Server und/oder auf der den Ausdruck steuernden Datenverarbeitungseinrichtung installiertes Computerprogramm veranlasst, auf dem Druckserver der Druckvorgang gestartet wird und die durch den Druckvorgang erzeugten Daten von dem Druckserver an das mobile Endgerät und von diesem Endgerät an einen vorgebbaren Drucker gesendet und dort ausgedruckt werden.

Die Erfindung hat den besonderen Vorteil, dass sie Nachrichten-Push-fähige Endgeräte, wie beispielsweise Blackberry-Geräte, unter Nutzung der bestehenden Architektur der Nachrichten-Push-Server mit einer zusätzlichen Druckoption versieht.

Der Ausdruck wird bei Einsatz der Erfindung direkt vom Gerät ausgelöst, da die Druckfunktion in das BlackBerry-Betriebssystem integriert wird. Es wird demnach keine Webseite aufgerufen, von der aus der Druck initiiert wird.

Die Weiterleitung der Nachrichten (z.B. E-Mails) vom Nachrichten-Push-Server zu einem Druck-Server, welcher in ein System zur Aufbereitung von Daten für die Ausgabe, insbesondere für den Ausdruck (im folgenden als Ausgabeaufbereitungs-System [AAS] bezeichnet), integriert ist, erfolgt bei Nutzung der Druckfunktion automatisch im Hintergrund und ist für den Benutzer des Endgeräts nicht zu erkennen.

Ein weiterer Vorteil der Erfindung besteht darin, dass die Druckfunktion in die Architektur des Nachrichten-Push-Servers integriert wird, d.h. speziell bei BlackBerry-Geräten:
- Nutzung des Mobile Data Services (MDS) auch für das Ausdrucken,
- sowohl der Datentransfer vom BlackBerry-Gerät zum Nachrichten-Push-Server beim Auslösen des Druckvorgangs als auch die Übertragung des Druckjobs vom Druckserver zum BlackBerry-Endgerät verläuft über den sicheren MDS-Tunnel.

In einer bevorzugten Ausführungsform der Erfindung werden Konfigurationsdaten in den User IT Policies des Nachrichten-Push-Servers (BlackBerry-Enterprise-Servers) hinterlegt und von dort auf die Endgeräte übertragen.

Durch die Erfindung wird somit ein Verfahren zur Erweiterung des Funktionsumfangs von Endgeräten, welche geeignet sind, mit Nachrichten-Signalisierungs-Services zusammenzuwirken, um eine Druckoption (bei welcher beliebige, vorzugsweise bluetoothfähige, Drucker genutzt werden können) bereitgestellt, wobei ein Nachrichten-Signalisierungs-Service mindestens einen Nachrichten-Signalisierungs-Server (NSS-Server) und mindestens ein mit dem Nachrichten-Signalisierungs-Service zusammenwirkendes Endgerät umfasst, und von dem mindestens einen NSS-Server dem mindestens einen mit dem Nachrichten-Signalisierungs-Service zusammenwirkenden Endgerät der Eingang von Nachrichten signalisiert wird. Weiterhin wird ein Computerprogramm zur Aufbereitung von Daten für die Ausgabe, insbesondere für den Ausdruck, bereitgestellt, wobei das Computerprogramm mindestens drei Programm-Module umfasst,
ein erstes Programm-Modul auf dem NSS-Server,
ein zweites Programm-Modul auf dem mit dem Nachrichten-Signalisierungs-Service zusammenwirkenden Endgerät und
ein drittes Programm-Modul auf einer den Ausdruck steuernde Datenverarbeitungseinrichtung.
Daten werden bei Verwendung der zusätzlich bereitgestellten Druckoption ausgedruckt, indem von dem mobilen, mit Nachrichten-Signalisierungs-Services zusammenwirkenden Endgerät eine Anforderung zum Ausdrucken von Daten an den NSS-Server und/oder die den Ausdruck steuernde Datenverarbeitungseinrichtung gesendet,
die Übertragung von angeforderten Daten vom NSS-Server auf einen Druckserver automatisch durch das auf dem NSS-Server installierte erste Programm-Modul und/oder durch das auf der den Ausdruck steuernden Datenverarbeitungseinrichtung installierte dritte Programm-Modul veranlasst,
auf dem Druckserver der Druckvorgang gestartet wird und die durch den Druckvorgang erzeugten Daten von dem Druckserver an das mobile, mit Nachrichten-Signalisierungs-Services zusammenwirkende Endgerät und von diesem Endgerät an einen vorgebbaren Drucker gesendet und dort ausgedruckt werden.

Die Erfindung wird nachfolgend unter Bezugnahme auf die Figuren der Zeichnungen an einem Ausführungsbeispiel näher erläutert. Es zeigt:
- Figur 1: eine typische Umgebung für die Nutzung von E-Mail-Push-fähigen Endgeräten;
- Figur 2: schematische Darstellung des Aufbaus einer erfindungsgemäßen Anordnung mit Integration des Systems zur Aufbereitung der Daten für den Ausdruck in eine bestehende Architektur eines Nachrichten-Push-Services;
- Figur 3: ein Aktivitätsdiagramm "E-Mail drucken";
- Figur 4a-c: Diagramm zur Illustration der für das Drucken von Emails speziell von einem BlackBerry-Endgerät relevanten Datenflüsse und Abläufe.

Im folgenden soll die Erfindung speziell für den Einsatz in BlackBerry-Geräten näher beschrieben werden. Die Erfindung ist aber nicht auf BlackBerry-Geräte eingeschränkt, sondern vielmehr auch für andere Nachrichten-Push-fähige Endgeräte, wie z.B. Symbian-Handies, nutzbar.

Durch die Erfindung wird ein Verfahren und eine Anordnung bereitgestellt, die es ermöglicht, über ein E-Mail-Push-fähiges Endgerät, wie beispielsweise ein BlackBerry-Endgerät, E-Mailanhänge und E-Mailtexte auszudrucken. Auf dem E-Mail-Push-fähigen Endgerät wird hierzu erfindungsgemäße ein Computerprogramm-Modul, im folgenden Client-Modul genannt, zur Verfügung gestellt, welches bei Aufruf der Druckfunktion die Kommunikation und den Datentransfer zwischen Client-Modul und Server ermöglicht.

Ein BlackBerry-Gerät wird druckfähig, indem auf ihm das Client-Modul installiert wird. Bei der Installation der erfindungsgemäßen Druckfunktion für BlackBerry werden automatisch die Konfigurationseinträge für die Verbindung zum Server des AAS (d.h. zu der den Druckvorgang steuernden Datenverarbeitungseinrichtung) in den User Policies des BlackBerry-Servers hinterlegt und von dort auf die Endgeräte übertragen (Server-Name/IP-Adresse des Servers des AAS, Port-Name, PIN des Endgeräts etc).

In einer beispielhaften Ausführungsform ist das Client-Modul für den BlackBerry Enterprise Server vorgesehen und steht damit für die Mailsysteme Microsoft Exchange und Lotus Notes zur Verfügung.

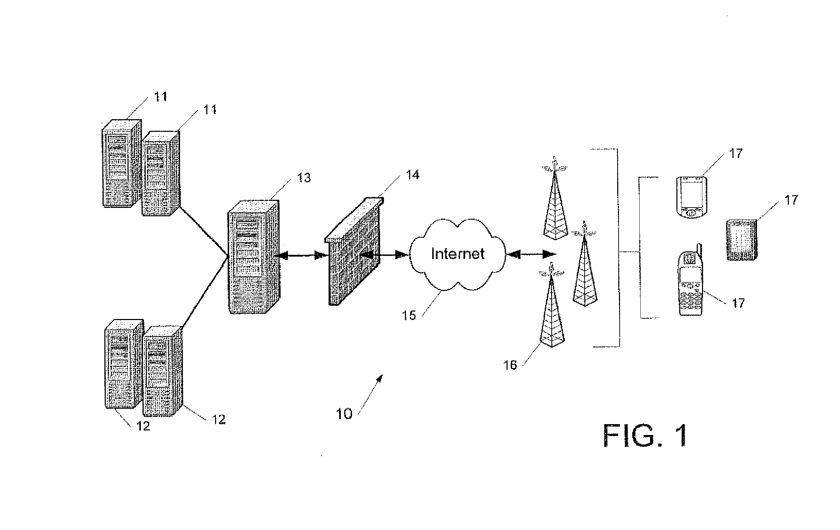

Die Figur 1 zeigt eine typische Umgebung 10 für die Nutzung von E-Mail-Push-fähigen Endgeräten.

Die Blackberry-Endgeräte oder Blackberry-fähigen Endgeräte 17 stehen über ein drahtloses Kommunikationsnetzwerk 16 (ggf. unter Nutzung des Internets 15) mit dem Blackberry-Server 13 in Verbindung. Der Blackberry-Server ist mit weiteren Kommunikations-Servern wie beispielsweise Microsoft Exchange Servern 11 und/oder Corporate Application Servern 12 verbunden, von denen er Informationen über eingehende Daten (z.B. E-Mails) erhält, die für registrierte Blackberry-Endgeräte 17 bestimmt sind. In den meisten Fällen ist der Blackberry-Server 13 durch eine Firewall 14 geschützt. Erhält der Blackberry-Server 13 eine Information über eingehende Daten, so erhält der Nutzer eines Blackberry-Endgeräts über die Funkverbindung 16 eine entsprechende Information.

Sobald auf dem BlackBerry 17 neue Emails eingegangen sind, besteht die Option, sie auszudrucken. Der Nutzer öffnet die gewünschte Email und wählt die Druckfunktion. Daraufhin wird das zu druckende Dokument (E-Mail-Text oder Anhang) automatisch im Hintergrund an ein spezielles Programm, den Mail Service, auf dem Server des AAS weitergeleitet. Hier wird der Druckjob generiert, welcher anschließend über den sicheren MDS-Tunnel (Mobile Service Data) des Blackberry-Servers zurück zum Endgerät gesandt wird.
Nun kann der Nutzer unter verschiedenen Druckertreibern den passenden auswählen (= Liste der auf dem Server des AAS installierten Druckertypen).

Verglichen mit dem Ausdruck von normalen, in einem Dateisystem abgelegten Dateien ist der Zugriff auf auszudruckende E-Mail-Anhänge weitaus komplexer. Daher soll kurz auf die Unterschiede zwischen Zugriffen auf ein Dateisystem (auch auf verschiedene Maschinen verteilt) und den internen Abläufen eines Mailservers beim Herausgeben von E-Mail-Anhängen an menschliche oder maschinelle Benutzer eingegangen werden.

Die Grundlage einer jeden Dateiverwaltung ist ein Dateisystem. Diese Funktionalität wird vom Betriebssystem bereit gestellt. So hat jedes Programm, das auf einem Rechner oder in einem Rechnerverbund läuft, Zugriff auf dieses Dateisystem. Der Begriff "Fileserver" bezeichnet ein Programm oder eine Maschine, dessen Schwerpunkt auf Sicherstellung dieser Betriebssystemfunktionalität liegt. Dies wird erreicht durch z.B. regelmäßige Sicherungskopien, Speicherung der Daten auf mehreren Datenträgern, Einsatz von Fehlererkennungs- und - korrekturmechanismen. Der Zugriff auf die Dateien erfolgt weiterhin mit den von Betriebssystem bereitgestellten Funktionen.

Ein Mailserver mit seiner Funktionalität setzt als Anwendungsprogramm auf dem Betriebssystem auf. Seine Daten stellt er aber nicht über Schnittstellen des Betriebssystems zur Verfügung. Er definiert eigene, über die exklusiv mit ihm Daten getauscht werden. Dazu gehören üblicherweise die Funktionen Mails abrufen und Mails senden. Den Zugriff auf seine gespeicherten Daten realisiert er über Funktionen des Betriebssystems.

Die Beziehung (oder Abhängigkeit) zwischen einem File- und einem Mailserver kann man so beschreiben:
Die Daten, die der Mailserver verwaltet, können auf dem Dateisystem liegen, das der Fileserver verwaltet. Sie stellen sich für den Fileserver nicht anders dar als beispielsweise eine Textdatei. Der Mailserver nutzt die Funktionalität des Fileservers. Umgekehrt hingegen gibt es keine Beziehung. Der Fileserver kann die Funktionalität des Mailservers in keiner Weise nutzen.

Der Mail Service übernimmt in einer speziellen Ausführungsform u.a. das Lösen der Mail-Anhänge aus der Email und ihre temporäre Ablage auf dem Server des AAS. Des weiteren ist er für die Benutzerverwaltung und Lizenzprüfung zuständig, da für jeden BlackBerry Benutzer, der Drucken können soll, die Email-Adresse des Benutzers hinterlegt wird.

Bei der erfindungsgemäßen Druckoption für BlackBerry werden die E-Mails und Anhänge durch den Mail Service in Verzeichnissen abgelegt. Diese sind nur temporär und für den Nutzer nicht sichtbar. Soll z.B. ein E-Mailtext gedruckt werden, generiert das Client-Modul eine Email, deren Anhang aus dem ursprünglichen E-Mailtext (txt-Format) besteht und sendet diese an den Mail Service. Der Nutzer muss kein zusätzliches Programm aufrufen. Da die Druckoption komplett in die Blackberry-Oberfläche integriert ist, bemerkt der User nichts von den vielfältigen Abläufen im Hintergrund. Lediglich ein zusätzlicher Menüpunkt PRINT zeugt von der erweiterten Funktionalität des BlackBerrys durch die erfindungsgemäße Integration des Systems zur Aufbereitung von Daten für den Ausdruck.

Die hinzugefügte Druckfunktion unterstützt vorteilhafterweise verschiedene Druckersprachen wie beispielsweise PCL und Postscript etc. Es können sowohl mobile bluetoothfähige Drucker als auch solche mit einer USB- oder LPT-Schnittstelle - mit einem Bluetooth-Adapter versehen - angesteuert werden. Es lassen sich auf diese Weise sämtliche druckbaren Formate ausgeben.

Die zusätzlich integrierte Druckoption für Blackberry ermöglicht demnach:
- den Ausdruck unterschiedlichster Dokumente mit einem BlackBerry-Gerät
- den Zugang zu Dokumenten im Originalformat, also auch zu Formaten, die im Attachment Viewer des BlackBerrys nicht angezeigt werden können

Bei der Erweiterung des Funktionsumfangs von E-Mail-Push-fähigen Endgeräten um eine Druckfunktion werden wie oben bereits erwähnt vorteilhafterweise vorhandene Funktionen und Abläufe hinsichtlich der Kommunikation zwischen E-Mail-Push-fähigen Endgeräten weitestgehend genutzt.

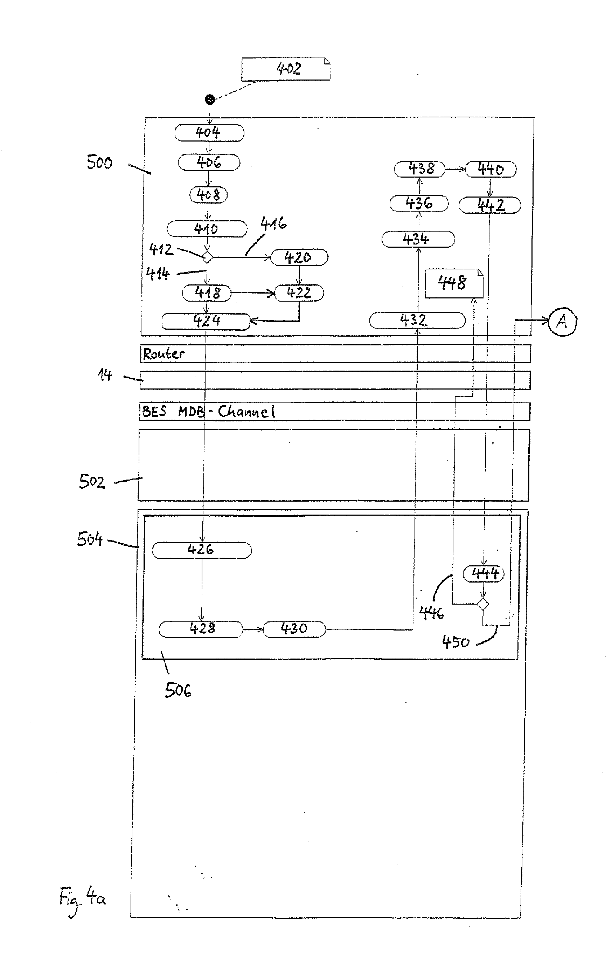

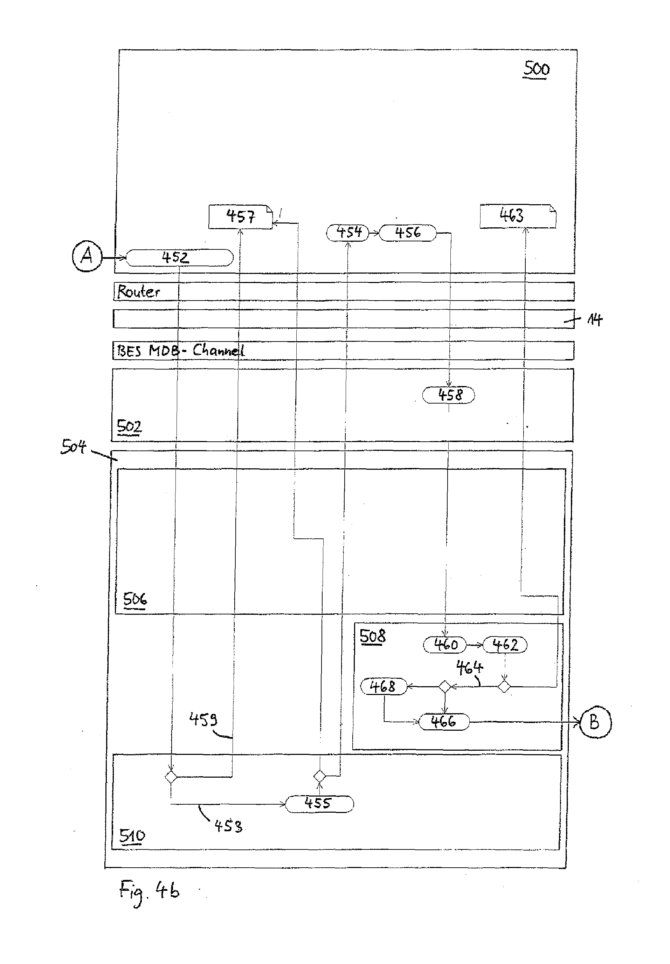

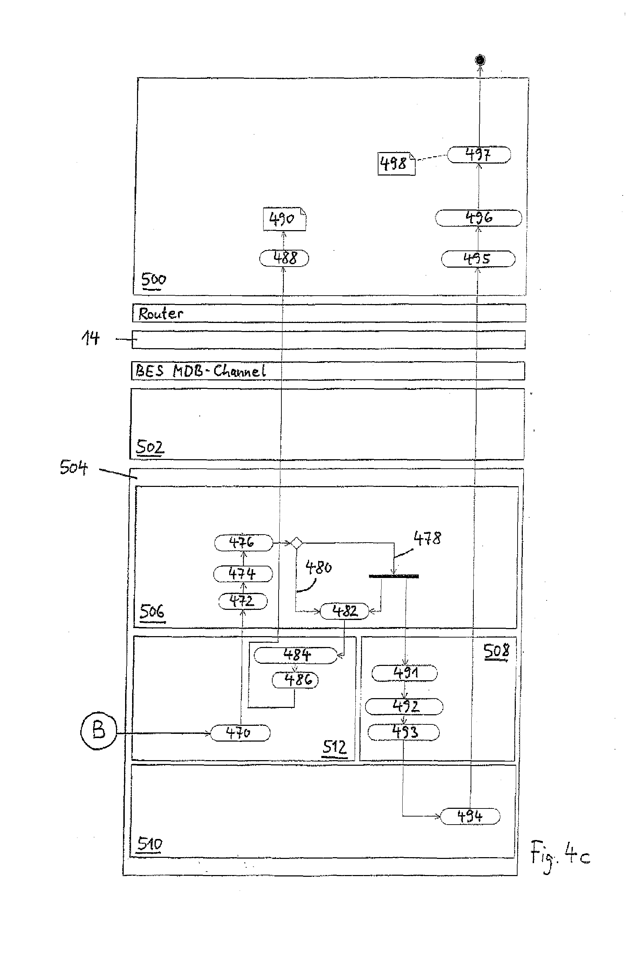

Für das Drucken mit dem Client-Modul 29 werden dabei auf Seiten der Datenverarbeitungseinrichtung, welche den Ausdruck steuert, folgende Komponenten eingesetzt:
- **ein AAS, umfassend:**
   - einen Publishing Service 506, d.h. einen Webdienst, über den die druckbaren Dateitypen verwaltet werden und der für den Aufruf der entsprechenden Anwendung und die Erzeugung des Druckobjekts für die empfangenen und zu druckenden Emails (und Anhänge) sorgt (vgl. auch Aktivitätsdiagramm in Figur 4).
   - einen Mail Service 512, welcher z.B. das Lösen 468 der Mail-Anhänge aus der Email und ihre temporäre Ablage auf dem Server des AAS übernimmt. Des weiteren ist er für die Benutzerverwaltung und Lizenzprüfung 462 zuständig, da für jeden BlackBerry Benutzer, der drucken können soll, die Email-Adresse des Benutzers hinterlegt wird.
   - ein virtueller Druckertreiber, der bei Druck des Mailtexts als ASCII-Druckertreiber fungiert.

- **einen Verbindungs-Service 510 (Connection-Service)**, welcher u.a. die Druckdaten an das E-Mail-Push-fähige Endgerät 27 sendet.
- **ein Computerprogramm (.print Engine), welches** die Druckaufträge vom Publishing Service übernimmt, rendert 491 und sie an den Connection Service 510 schickt 493, der sie wiederum an die BlackBerry Endgeräte 27 weitergibt 494.

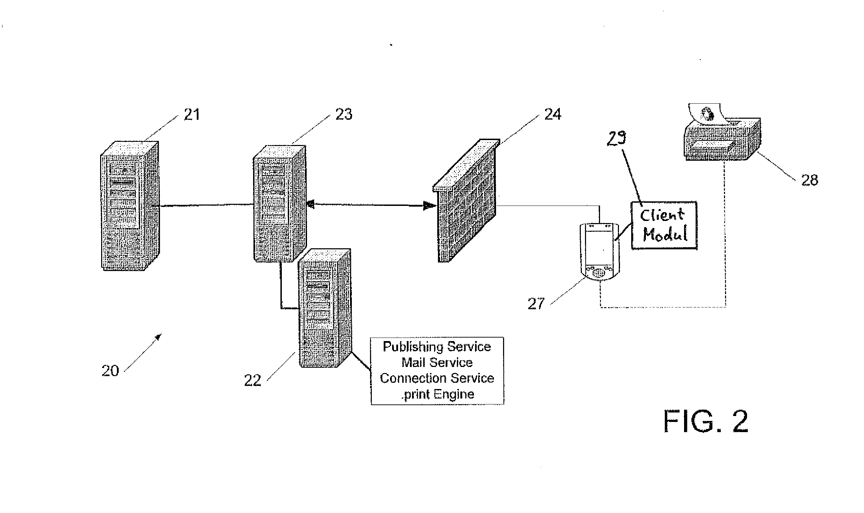

Für die Nutzung des Client-Modul 29, 500 für BlackBerry müssen die Komponenten des AAS in die Umgebung des Blackberry-Servers 23 integriert werden. Eine vereinfachte Darstellung des Aufbaus mit Integration des Servers 22 des AAS mit den vorstehend erläuterten Komponenten in eine erfindungsgemäße Anordnung 20 stellt Figur 2 dar. Die Anordnung 20 umfasst dabei mindestens einen Microsoft Exchange oder Lotus Notes Server 21, mindestens einen Blackberry Enterprise Server 23 mindestens einen Servers 22 des AAS. Vorteilhafterweise werden diese Server durch einen Firewall 24 geschützt. Weiterhin umfasst eine erfindungsgemäße Anordnung 20 mindestens ein BlackBerry Endgerät 27, auf dem ein Client-Modul 29 installiert ist, welcher die Druckdaten an einen Drucker 28 weiterleitet.

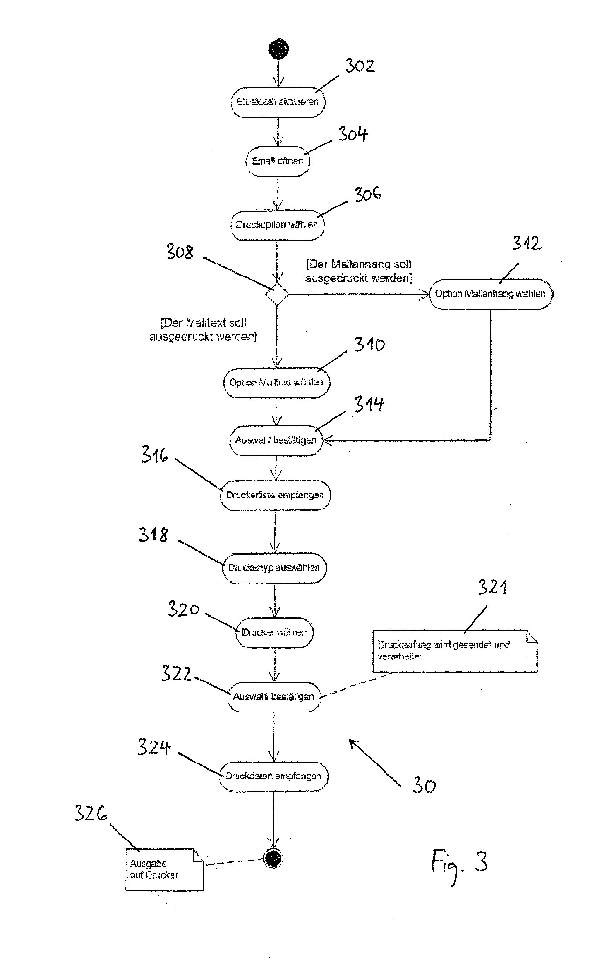

### Anwendungsfälle und Prozesse (vgl. Figuren 3 und 4)

### E-Mail drucken

Der Anwendungsfall "E-Mail drucken" unterteilt sich in "E-Mailtext drucken" und "E-Mail-Anhang drucken". Nachdem Bluetooth konfiguriert 404 und aktiviert 302, 406 wurde, wird der Druckvorgang eingeleitet durch die Aktion "E-Mail auswählen und öffnen" 304, 408.

### E-Mail auswählen und öffnen

Um einen E-Mailtext und einen E-Mail-Anhang drucken zu können, muss die entsprechende E-Mail zuvor auf dem E-Mail-Push-fähigen Endgerät ausgewählt und geöffnet werden.

### E-Mailtext oder E-Mail-Anhang drucken

Nach Auswahl und Öffnen 304, 408 einer E-Mail auf dem E-Mail-Push-fähigen Endgerät, steht in einer beispielhaften Ausführungsform über das Menü "Optionen" die Funktion "Drucken" zur Verfügung.
Nach Auswahl der Option "Drucken" 306, 410 erfolgt eine Abfrage 308, 412, ob der E-Mailtext 310, 414 oder ein in dieser E-Mail enthaltener Anhang 312, 416 ausgedruckt werden soll.

### Systemanforderungen

Das in Figur 3 und (mehr detailliert) in Figur 4 dargestellte Aktivitätsdiagramm illustriert den Ablauf 30 beim Drucken von E-Mails und Email-Anhängen mit dem E-Mail-Push-fähigen Endgerät aus Benutzersicht. Die notwendigen Systemanforderungen zur Realisierung sind in den Folgeabschnitten beschrieben.

### Client-Modul 29 bereitstellen und Konfigurationsdaten hinterlegen

Das Client-Modul 29 für den E-Mail-Push-Service wird in Dateien bereitgestellt, die auf E-Mail-Push-fähigen Endgeräten ausführbar sind (bei Blackberry-Endgeräten beispielsweise in Dateien mit den Formaten *.alx oder *.cod). Diese Dateien können per Download von der Homepage eines Anbieters der zusätzlichen Druckoption, über die BlackBerry Desktop Software oder über OTA von einem Server des E-Mail-Push-Services auf das Endgerät übertragen werden.
Mit Ausführen der Installationsdatei wird die Druckfunktion auf dem E-Mail-Push-fähigen Endgerät installiert.
Die Konfigurationsdaten werden in den User Policies eines Servers des E-Mail-Push-Services hinterlegt und von dort auf die Endgeräte übertragen.

Dabei werden folgende Konfigurationsdaten des AAS hinterlegt, bzw. genutzt:
- **Server:**
   Name oder IP-Adresse des Servers des AAS
- **Port:**
   Name des Ports, über den die Verbindung zum Server des AAS (bzw. zur Komponente Connection Service) erfolgt
- Für die Verbindung zum und Authentifizierung auf dem Server des AAS wird die PIN des BlackBerry-Endgerätes übermittelt.
- **Mail Service Adresse:**
   E-Mail-Adresse für den Mail Service; an diese werden über eine Weiterleitung die zu druckenden E-Mails, bzw. E-Mail-anhänge gesendet.

Nach Abschluss der Installation wird das Client-Modul automatisch gestartet und stellt nach dem Öffnen einer E-Mail eine Druckfunktion zur Verfügung.

Druckoption wählen und E-Mail oder Anhang für den Druck auswählen

Um einen E-Mailtext oder einen E-Mail-Anhang auszudrucken, wird die zu druckende E-Mail geöffnet 304, 408 und über das Menü "Optionen" die Option "Drucken" ausgewählt 306, 410. Über den sich öffnenden Dialog kann der E-Mailtext 310, 418 oder - falls vorhanden - der Anhang 312, 420 zum Drucken ausgewählt werden.

### Konfigurations-Request senden

Nach Bestätigung 314, 422 der Auswahl E-Mailtext oder E-Mailanhang, wird ein Konfigurationsrequest an den Publishing Service 506 des Servers 504 des AAS gesendet 424. Der Konfigurationsrequest fragt alle notwendigen Konfigurationsdaten sowie die Liste der verfügbaren Druckertypen ab.

### Konfigurationsdaten und Liste der verfügbaren Druckertypen empfangen

Konnte die Verbindung zum Server 504 des AAS hergestellt werden, sendet 428 die Komponente Publishing Service 506 nach Empfang 426 des Konfigurationsrequests u. a. folgende Informationen an das E-Mail-Push-fähige Endgerät zurück:
- Anzahl der hinterlegten Druckertypen
- Liste der hinterlegten Druckertypen 430
- Server (Connection Service)
- Port (Connection Service)
- weitere Informationen zur Steuerung der Übertragung, wie beispielsweise Timeout-Informationen

Konnte die Verbindung hergestellt werden und ist die Abfrage erfolgreich, d.h. wurden die Konfigurationsdaten (einschließlich der Druckertypenliste 430) vom Publishing Service 506 gesendet, Schritt 428, und vom Client Modul 500 empfangen 432, 434, wird dem Benutzer auf dem E-Mail-Push-fähigen Endgerät eine Druckerliste ausgegeben 316, aus der der entsprechende Druckertyp ausgewählt 318, 436, und die Auswahl bestätigt 322 werden muss.
Konnte keine Verbindung zum Server 504 des AAS hergestellt werden, wird dem Benutzer eine entsprechende Meldung angezeigt.
Folgende Gründe, die in der genannten Meldung ausgegeben werden, können die Ursache dafür sein, dass keine Verbindung hergestellt werde konnte:

### 1. Server nicht erreichbar:

Unter der angegebenen IP-Adresse konnte der Connection Service nicht erreicht werden. Der Verbindungsversuch kann wiederholt werden.

### 2. Konfigurationsdaten falsch oder unvollständig:

Die Konfigurationsdaten müssen durch den Administrator des E-Mail-Push-Services geändert werden.

### Drucker auswählen und Upload-Request senden

Wurde nach Auswahl 318, 436 des Druckertyps die Auswahl bestätigt 322, wird dem Benutzer eine Liste der gekoppelten Bluetooth-Drucker ausgegeben, aus der der gewünschte Drucker ausgewählt 320, 438 werden kann. Voraussetzung hierfür ist die vorherige Aktivierung 404 der Bluetooth-Schnittstelle des E-Mail-Push-fähigen Endgeräts. In einer bevorzugten Ausführungsform ist vorgesehen, dass Bluetooth-Drucker vorher bereits vom Benutzer mit dem E-Mail-Push-fähigen Endgeräts gekoppelt worden sind.
Nach erfolgter Auswahl 440 wird ein Upload-Request an die Komponente Publishing Service 506 gesendet 442. Dieser Upload Request enthält den ausgewählten Druckertypen und die Dateinamen der zu druckenden Objekte (E-Mailtext und ggf. E-Mailanhang). Vom Publishing Service 506 wird geprüft 444, ob der Dateityp des E-Mailtexts ein vom Publishing Service 506 unterstützten Typ ist. In einer Ausführungsform ist vorgesehen, dass der E-Mailtext dabei in einem vorgegebenen Dateityp, bspw. in den Dateityp .txt, gewandelt wird. Somit wird vorab geprüft, ob der Dateityp des Anhangs vom AAS unterstützt wird. Wurde der Publishing Service 506 nicht für den Dateityp des E-Mailanhangs konfiguriert 446, wird dem Benutzer eine entsprechende Meldung ausgegeben 448, und der Vorgang wird abgebrochen.
Bei Unterstützung 450 der Dateitypen wird anschließend eine Verbindung zum Connection Service 510 auf dem Server 504 des AAS hergestellt 452.

Wenn die Verbindung zum Connection Service 510 erfolgreich aufgebaut wurde 453, werden in Schritt 455 die Zugangsdaten geprüft. Eine entsprechende Nachricht wird in Schritt 457 an den Nutzer versandt. Auch in dem Falle, dass keine Verbindung zum Connection Service 510 aufgebaut werden konnte 459, wird eine entsprechende Nachricht an den Nutzer versandt 457.

Der im Anschluss folgende Prozess ist im Folgenden beschrieben.

### E-Mail (Text oder Anhang) drucken

Wurde die Option "E-Mailtext drucken" gewählt 310, 414, erfolgt nach Auswahl 318/320, 436/454 eines Druckertypen/Druckers der Upload 456 der E-Mail auf den Server 504 des AAS.
Hierbei wird - vom Client-Modul 29, 500 im Hintergrund generiert oder initiiert, die Email vom Server 23, 502 des E-Mail-Push-Service an die Komponente Mail Service 512 gesendet. Bei Ausdruck des E-Mailtextes wird vom Client-Modul 29, 500 eine E-Mail mit dem E-Mailtext als .txt-Anhang generiert und an den Mail Service 512 gesendet 458; soll ein Anhang 312, 416 gedruckt werden, wird die entsprechende E-Mail samt Anhang an den Mail Service 512 weitergeleitet 458.
Bei Eintreffen 460 der E-Mail wird vom Mail Service 512 überprüft 462, ob die notwendigen Lizenzen auf dem Server 504 des AAS und für diesen Client vorhanden und gültig sind.
Bei erfolgreicher Lizenzprüfung 464 wird der E-Mail-Text oder E-Mail-Anhang, nachdem dieser von der E-Mail gelöst 468 wurde, durch den Mail Service 512 als .txt-Datei temporär auf dem Server 504 des AAS abgelegt 466.

Die Information über den Speicherort wird zusammen mit Informationen zum Dateitypen und dem ausgewählten Druckertypen im Upload-Request an die Komponente Publishing Service 506 weitergegeben 470 (Upload-Request senden), 472 (Upload-Request empfangen), ein entsprechendes Druckerobjekt erzeugt 474 und die E-Mail (E-Mailtext oder E-Mailanhang) parametrisiert mit der entsprechenden Anwendung und unter Angabe des Druckerobjekts (bei E-Mailtext wird der oben erwähnte virtuelle Druckertreiber als ASCII-Treiber genutzt) aufgerufen 476. Es wird ein Druckauftrag erzeugt, der an die auf dem Server 504 des AAS ebenfalls installierte print Engine 508 weitergeleitet wird.
Über Status des Ablaufs (Success 478 oder Fail 480) bis zu dieser Stelle wird im Rahmen des Uploads eine Statusmeldung an den Mail Service 512 zurückgesendet 482. Der Mail Service 512 generiert 484 eine Status-Mail und schickt 586 diese Statusinformation an den Absender (also das E-Mail-Push-fähige Endgerät) des Druckauftrags, wo das Client-Modul 29, 500 diese Statusmail empfängt 488, ausliest und eine entsprechende Statusmeldung an den Benutzer ausgibt 490.

Auf dem Server des AAS rendert 491 und komprimiert 492 bei erfolgreicher Erzeugung eines Druckjobs die print Engine 508 die übergebenen Druckdaten und leitet 493 sie bandbreitenkontrolliert an das E-Mail-Push-fähige Endgerät weiter. Die Weiterleitung erfolgt dabei über die Komponente Connection Service 510.
Die Druckdaten werden in Paketen an das E-Mail-Push-fähige Endgerät 500 gesendet 494, d.h. gestreamt, wo sie empfangen 324, 495, dekomprimiert 496 und an den ausgewählten Bluetooth-Drucker weitergegeben 326, 497 werden. Vorteilhaft ist es dabei, wenn auf dem E-Mail-Push-fähigem Endgerät 27 eine Meldung über den Fortschritt des Druckvorgangs ausgegeben wird 498.

### Lizenzierung

Die Erweiterung des Funktionsumfangs für BlackBerry um eine Druckoption kann wie folgt lizenziert werden:
- Eine Lizenz "Druckoption BlackBerry (Corporate Edition)" für die Nutzung der Serverkomponenten; **Einschränkung:** Alle Komponenten des AAS müssen auf einem Server installiert sein (in der Regel der Server, auf dem der BlackBerry Enterprise Server installiert ist).
- Je BlackBerry-Benutzer eine Lizenz" Client-Modul " (Connected Client).

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch macht.

## Patentansprüche

1. Verfahren zum Ausdruck von Daten bei Nutzung eines Nachrichten-Signalisierungs-Services (NSS), wobei auf einem Server des Nachrichten-Signalisierungs-Services (NSS) eingehende Daten einem Endgerät signalisiert werden und ein Zugriff des Endgerätes auf die bei dem NSS-Server eingegangenen Daten unter Nutzung von Mobilfunktechnologie ausführbar ist,
**dadurch gekennzeichnet, dass**
von dem Endgerät eine Anforderung zum Ausdruck von Daten an den NSS-Server und/oder eine den Ausdruck steuernde Datenverarbeitungseinrichtung gesendet,
die Übertragung von angeforderten Daten vom NSS-Server auf einen Druckserver automatisch durch ein auf dem NSS-Server und/oder auf der den Ausdruck steuernden Datenverarbeitungseinrichtung installiertes Computerprogramm veranlasst, auf dem Druckserver der Druckvorgang gestartet wird und die durch den Druckvorgang erzeugten Daten von dem Druckserver an das mobile Endgerät und von diesem Endgerät an einen vorgebbaren Drucker gesendet und dort ausgedruckt werden.

2. Verfahren nach Anspruch 1,
**dadurch gekennzeichnet dass**,
es sich bei dem Nachrichten-Signalisierungs-Service (NSS) um einen E-Mail-Push-Service handelt.

3. Verfahren nach Anspruch 1,
**dadurch gekennzeichnet, dass**
es sich bei den auf dem NSS-Server eingehende Daten um
- E-Mails und/oder,
- mittels Short Message Service (SMS) versandte Nachrichten und/oder
- mittels Multimedia Message Service (MMS) versandte Nachrichten
handelt.

4. Verfahren nach Anspruch 3,
**dadurch gekennzeichnet, dass**
es sich um E-Mails mit E-Mail-Anhang handelt.

5. Verfahren nach Anspruch 1,
**dadurch gekennzeichnet, dass**
es sich bei dem mobilen Endgerät um ein E-Mail-Push-fähiges Endgerät handelt.

6. Verfahren nach Anspruch 1,
**dadurch gekennzeichnet, dass**
als Mobilfunktechnologie
- Global System for Mobile Communications (GSM),
- General Packet Radio Service (GPRS),
- Code Division Multiple Access (CDMA) oder
- Universal Mobile Telecommunications System (UMTS) genutzt wird.

7. Verfahren nach Anspruch 1,
**dadurch gekennzeichnet, dass**
für die Übertragung der durch den Druckvorgang erzeugten Daten von dem Druckserver an das mobile Endgerät eine zwischen dem NSS-Server und dem mobilen Endgerät eingerichtete Kommunikationsverbindung genutzt wird.

8. Verfahren nach Anspruch 7,
**dadurch gekennzeichnet, dass**
die zwischen dem NSS-Server und dem mobilen Endgerät eingerichtete Kommunikationsverbindung durch Nutzung eines Kanals innerhalb der Kommunikation von Endgerät und NSS-Server durchgeführt wird.

9. Verfahren nach Anspruch 1,
**dadurch gekennzeichnet, dass**
für die Übertragung von Daten zwischen dem mobilen Endgerät und dem NSS-Server und/oder zwischen dem mobilen Endgerät und der den Ausdruck steuernden Datenverarbeitungseinrichtung für den Fall, dass das mobile Endgerät vom Server nicht adressiert werden kann, das mobile Endgerät selbstständig eine Verbindung zu der den Ausdruck steuernden Datenverarbeitungseinrichtung herstellt, und die durch den Druckvorgang erzeugten Daten über diese Verbindung an das mobile Endgerät übertragen werden.

10. Verfahren nach Anspruch 1,
**dadurch gekennzeichnet, dass**
die durch den Druckvorgang erzeugten Daten von dem mobilen Endgerät über eine Bluetooth-Schnittstelle an den vorgebbaren Drucker gesendet werden.

11. Verfahren nach Anspruch 1,
**dadurch gekennzeichnet, dass**
die durch den Druckvorgang erzeugten Daten von dem mobilen Endgerät über eine Infrarot-Schnittstelle an den vorgebbaren Drucker gesendet werden.

12. Anordnung zum Ausdrucken von Daten bei Nutzung eines Nachrichten-Signalisierungs-Services, umfassend mindestens einen Nachrichten-Signalisierungs-Server (NSS-Server) und mindestens ein mit dem Nachrichten-Signalisierungs-Service zusammenwirkendes Endgerät, wobei auf dem NSS-Server eingehende Daten dem Endgerät signalisiert werden und ein Zugriff des Endgerätes auf die bei dem NSS-Server eingegangenen Daten unter Nutzung von Mobilfunktechnologie ausführbar ist, und die Anordnung derart eingerichtet ist, dass ein Ausdrucken von Daten ermöglicht wird, indem von dem Endgerät eine Anforderung zum Ausdrucken von Daten an den NSS-Server und/oder eine den Ausdruck steuernde Datenverarbeitungseinrichtung gesendet, die Übertragung von angeforderten Daten vom NSS-Server auf einen Druckserver automatisch durch ein auf dem NSS-Server und/oder auf der den Ausdruck steuernden Datenverarbeitungseinrichtung installiertes Computerprogramm veranlasst, auf dem Druckserver der Druckvorgang gestartet wird und die durch den Druckvorgang erzeugten Daten von dem Druckserver an das mobile Endgerät und von diesem Endgerät an einen vorgebbaren Drucker gesendet und dort ausgedruckt werden.

13. Computerprogramm, das es einem Computer ermöglicht, nachdem es in den Speicher des Computers geladen worden ist, ein Verfahren zum Ausdrucken von Daten bei Nutzung eines Nachrichten-Signalisierungs-Services durchzuführen, wobei auf einem Server des Nachrichten-Signalisierungs-Services (NSS-Server) eingehende Daten einem Endgerät signalisiert werden und ein Zugriff des Endgerätes auf die bei dem NSS-Server eingegangenen Daten unter Nutzung von Mobilfunktechnologie ausführbar ist, und von dem Endgerät eine Anforderung zum Ausdrucken von Daten an den NSS-Server und/oder eine den Ausdruck steuernde Datenverarbeitungseinrichtung gesendet, die Übertragung von angeforderten Daten vom NSS-Server auf einen Druckserver automatisch durch ein auf dem NSS-Server und/oder auf der den Ausdruck steuernden Datenverarbeitungseinrichtung installiertes Computerprogramm veranlasst, auf dem Druckserver der Druckvorgang gestartet wird und die durch den Druckvorgang erzeugten Daten von dem Druckserver an das mobile Endgerät und von diesem Endgerät an einen vorgebbaren Drucker gesendet und dort ausgedruckt werden.

14. Computerlesbares Speichermedium, auf dem ein Programm gespeichert ist, das es einem Computer ermöglicht, nachdem es in den Speicher des Computers geladen worden ist, ein Verfahren zum Ausdrucken von Daten bei Nutzung eines Nachrichten-Signalisierungs-Services durchzuführen, wobei auf einem Server des Nachrichten-Signalisierungs-Services (NSS-Server) eingehende Daten einem Endgerät signalisiert werden und ein Zugriff des Endgerätes auf die bei dem NSS-Server eingegangenen Daten unter Nutzung von Mobilfunktechnologie ausführbar ist, und von dem Endgerät eine Anforderung zum Ausdrucken von Daten an den NSS-Server und/oder eine den Ausdruck steuernde Datenverarbeitungseinrichtung gesendet, die Übertragung von angeforderten Daten vom NSS-Server auf einen Druckserver automatisch durch ein auf dem NSS-Server und/oder auf der den Ausdruck steuernden Datenverarbeitungseinrichtung installiertes Computer-programm veranlasst,auf dem Druckserver der Druckvorgang gestartet wird und die durch den Druckvorgang erzeugten Daten von dem Druckserver an das mobile Endgerät und von diesem Endgerät an einen vorgebbaren Drucker gesendet und dort ausgedruckt werden.

15. Verfahren, bei dem ein Computerprogramm nach Anspruch 13 aus einem elektronischen Datennetz, wie beispielsweise aus dem Internet, auf eine an das Datennetz angeschlossene Datenverarbeitungseinrichtung heruntergeladen wird.

16. Verfahren zur Erweiterung des Funktionsumfangs von mobilen, mit Nachrichten-Signalisierungs-Services zusammenwirkenden Endgeräten, wobei der Nachrichten-Signalisierungs-Service mindestens einen Nachrichten-Signalisierungs-Server (NSS-Server) und mindestens ein mobiles, mit dem Nachrichten-Signalisierungs-Service zusammenwirkendes Endgerät umfasst, und von dem mindestens einen NSS-Server dem mindestens einen mobilen, mit dem Nachrichten-Signalisierungs-Service zusammenwirkenden Endgerät der Eingang von Nachrichten signalisiert wird,
**dadurch gekennzeichnet, dass**
ein Computerprogramm zur Aufbereitung von Daten für die Ausgabe bereitgestellt wird, wobei das Computer-programm mindestens drei Programm-Module umfasst,
ein erstes Programm-Modul auf dem NSS-Server,
ein zweites Programm-Modul auf dem mobilen, mit dem Nachrichten-Signalisierungs-Service zusammenwirkenden Endgerät und
ein drittes Programm-Modul auf einer den Ausdruck steuernde Datenverarbeitungseinrichtung installiert wird, und Daten ausgedruckt werden, indem von dem mobilen, mit Nachrichten-Signalisierungs-Services zusammenwirkenden Endgerät eine Anforderung zum Ausdrucken von Daten an den NSS-Server und/oder die den Ausdruck steuernde Datenverarbeitungseinrichtung gesendet, die Übertragung von angeforderten Daten vom NSS-Server auf einen Druckserver automatisch durch das auf dem NSS-Server installierte erste Programm-Modul und/oder durch das auf der den Ausdruck steuernden Datenverarbeitungseinrichtung installierte dritte Programm-Modul veranlasst, auf dem Druckserver der Druckvorgang gestartet wird und die durch den Druckvorgang erzeugten Daten von dem Druckserver an das mobile, mit Nachrichten-Signalisierungs-Services zusammenwirkende Endgerät und von diesem Endgerät an einen vorgebbaren Drucker gesendet und dort ausgedruckt werden.

17. Verfahren nach Anspruch 16,
**dadurch gekennzeichnet, dass**
das zweite Programm-Modul von dem NSS-Server mittels OTA-Konfiguration (OTA = On The Air) über eine drahtlose Schnittstelle an das mobile, mit Nachrichten-Signalisierungs-Services zusammenwirkende Endgerät übertragen und dort automatisch installiert wird.
